# EUROPÄISCHE PATENTANMELDUNG

(11) **EP 1 132 152 A2**
(43) Veröffentlichungstag der Anmeldung: **12.09.2001**
(21) Anmeldenummer: 01105707.2
(22) Anmeldetag: 07.03.2001
(51) Int. Cl.: B07C 5/342, H01M 6/52

(54) **Verfahren zum Aussortieren von Gegenständen sowie Vorrichtung zur Durchführung des Verfahrens**

(30) Priorität: 08.03.2000 DE 10010793
(71) Anmelder: BSBG Bremer Sonderabfallberatungsgesellschaft mbH, 28195 Bremen (DE)
(72) Erfinder: Rausch, Sven, Dr., 28195 Bremen (DE); Molchin, Thure, 28719 Bremen (DE)
(74) Vertreter: von Ahsen, Erwin-Detlef, Dipl.-Ing.

(57) **Zusammenfassung**

Die Erfindung betrifft ein Verfahren zum Aussortieren von Gegenständen (10), die chemische Elemente aus der Lanthanidengruppe enthalten und einen Metallmantel aufweisen, aus anderen Gegenständen, insbesondere zum Aussortieren gebrauchter Nickel-Metall-Hydrid-Altbatterien oder Nickel-Metall-Hydrid-Altakkumulatoren (10) aus anderen Altbatterien oder Altakkumulatoren (10), das dadurch gekennzeichnet ist, daß die Gegenstände (10), die chemische Elemente aus der Lanthanidengruppe aufweisen, aufgrund einer Röntgenfluoreszenzanalyse aussortiert werden

## Beschreibung

Die Erfindung betrifft ein Verfahren zum Aussortieren von Gegenständen, die chemische Elemente aus der Lanthanidengruppe enthalten und einen Metallmantel aufweisen, aus anderen Gegenständen, insbesondere zum Aussortieren gebrauchter Nickel-Metall-Hydrid-Altbatterien oder Nickel-Metall-Hydrid-Altakkumulatoren aus anderen Altbatterien oder Altakkumulatoren.

Nickel-Metall-Hydrid-Akkumulatoren enthalten sehr hochpreisige hydridbildende Metallegierungen. Als hydidbildende Metalle werden vorrangig sogenannte AB₂- oder AB₅-Legierungen eingesetzt. Ein typischer Vertreter der AB₅-Legierungen ist die Legierung LaNi₅. In Variationen wird Lanthan durch Gemische anderer Lanthaniden, wie beispielsweise Ce, Pr oder Nd, teilweise ersetzt. In jedem Fall enthalten Nickel-Metall-Hydrid-Akkumulatoren mit AB₅-Legierungen Elemente der Lanthanidengruppe. Es besteht heute ein großes ökonomisches Interesse, diese Untergruppe der Nickel-Metall-Hydrid-Akkumulatoren sortenrein abzutrennen. Sortenrein bedeutet dabei, daß in einem Behälter, in dem die Nickel-Metall-Hydrid-Altakkumulatoren mit Elementen aus der Lanthanidengruppe einsortiert werden, auch zu 100% nur solche Altakkumulatoren enthalten. Fehlwürfe dürfen allenfalls nur insoweit vorkommen, als daß derartige Nickel-Metall-Hydrid-Altakkumulatoren in einem anderen Behälter landen. Selbstverständlich ist deren Zahl möglichst gering zu halten.

Bisher werden Altakkumulatoren der in Rede stehenden Art gar nicht aus anderen Altakkumulatoren aussortiert, sondern sogleich zusammen mit den anderen Altakkumulatoren auf einer Deponie endgelagert. Dieses ist aufgrund der hochpreisigen Elemente aus der Lanthanidengruppe ökonomisch nicht sinnvoll. Werden die in Rede stehenden Altakkumulatoren aussortiert, geschieht dies von Hand aufgrund von Inhaltsangaben auf den Altakkumulator-Etiketten. Zwar offenbart die DE 196 10 093 A1 ein Verfahren zum automatischen Sortieren von Altbatterien und Altakkumulatoren nach ihrem Typ, also nach ihren Inhaltsstoffen. Die Elemente aus der Lanthanidengruppe enthaltenden Nickel-Metall-Hydrid-Altakkumulatoren lassen sich mit diesem Verfahren nicht erkennen und werden folglich einer Restfraktion mit nicht eindeutig identifizierbaren Altbatterien und Altakkumulatoren zugeordnet. Ein Verfahren, mit dem sich Elemente aus der Lanthanidengruppe enthaltende Nickel-Metall-Hydrid-Altakkumulatoren und vergleichbare Gegenstände aus anderen Gegenständen aussortieren lassen, ist bisher nicht bekanntgeworden.

Hiervon ausgehend liegt der Erfindung das Problem zugrunde, ein Verfahren und eine Vorrichtung zu schaffen, durch die Gegenstände mit chemischen Elementen aus der Lanthanidengruppe, insbesondere Nickel-Metall-Hydrid-Altakkumulatoren, sicher aussortiert werden können.

Zur Lösung dieses Problems ist das erfindungsgemäße Verfahren dadurch gekennzeichnet, daß die Gegenstände mit chemischen Elementen aus der Lanthanidengruppe aufgrund einer Röntgenfluoreszenzanalyse aussortiert werden.

Zwar ist es prinzipiell bekannt, eine Röntgenfluoreszenzanalyse zum Sortieren von Gegenständen einzusetzen. Derartige Verfahren und Vorrichtungen sind beispielsweise durch die US 4,848,590 oder die EP 0 096 092 A bekannt geworden. Die bekannten Verfahren zum Sortieren von Gegenständen mittels einer Röntgenfluoreszenzanalyse beruhen aber immer nur auf einer Oberflächenanalyse. Röntgenfluoreszenzanalyse ist nämlich im allgemeinen so weich, daß sie nicht in der Lage ist, einen Metallmantel zu durchdringen. Beim Fachmann hat sich deshalb die Röntgenfluoreszenzstrahlung als eine reine Oberflächenanalyse festgesetzt. Die Röntgenfluoreszenzstrahlung von Elementen aus der Lanthanidengruppe, insbesondere von Lanthan, ist aber so hart, daß sie einen, insbesondere bei Altakkumulatoren stets vorhandenen Metallmantel durchdringen kann. Hier kann die Röntgenfluoreszenzanalyse also ausnahmsweise auch außerhalb der Oberflächenanalyse zur Analyse tieferer Schichten eingesetzt werden. Durch das obengenannte Vorurteil war der Fachmann jedoch bisher hieran gehindert.

Nach einer ersten Ausführungsform der Erfindung wird zum Erkennen der Gegenstände mit Elementen aus der Lanthanidengruppe das Verhältnis der Dosisleistungen der Röntgenstrahlung im Fluoreszenzbereich des jeweiligen chemischen Elements aus der Lanthanidengruppe und eines zu diesem Bereich benachbarten Energiebereich gemessen. Wird nämlich ein Gegenstand an der Röntgenquelle und einem Röntgensensor vorbeibewegt, so steigt die vom Gegenstand zurückgeworfene und vom Sensor detektierte Röntgenstrahlung entsprechend dem Spektrum der Röntgenquelle bei Annäherung des Gegenstandes an den Sensor an, um sodann bei Entfernen des Gegenstandes wieder abzufallen. Das Verhältnis der Dosisleistungen bestimmter benachbarter Energiebereiche bleibt dabei annähernd konstant. Enthält nun aber ein Gegenstand Elemente aus der Lanthanidengruppe, so ist die Dosisleistung im Energiebereich der Fluoreszenzstrahlung um den Betrag der Fluoreszenzstrahlung erhöht, so daß sich ein anderes Verhältnis der Dosisleistung in diesem Bereich zu einem benachbarten Bereich ergibt. Hierdurch wird ein Signal für eine Sortiereinheit ausgelöst, die den entsprechenden Gegenstand aussortiert.

Nach einem alternativen Ausführungsbeispiel werden die Gegenstände mit polarisierter Röntgenstrahlung angeregt. Die von den Gegenständen reflektierte bzw. die die Gegenstände durchdringende Röntgenstrahlung behält ihre Polarisationsebene. Die von der polarisierten Röntgenstrahlung zum Aussenden von Röntgenfluoreszenzstrahlung angeregten Elemente der Lanthanidengruppe senden aber auch Röntgenfluoreszenzstrahlung außerhalb der Polarisationsebene der Erregerstrahlung aus. Dieses wird wiederum detektiert und ein Signal zum Aussortieren des entsprechenden Gegenstandes abgesetzt.

Neben der Fluoreszenzstrahlung kann entweder die von den Gegenständen reflektierte Strahlung (Reflektionsanalyse) oder die die Gegenstände durchdringende Strahlung (Durchleuchtungsanalyse) gemessen werden. Als Erregerstrahlung wird vorzugsweise eine Röntgenstrahlung von 30 bis 200 kV verwendet. Es kann monochromatische oder polychromatische Röntgenstrahlung zur Anregung eingesetzt werden.

Eine Vorrichtung zur Durchführung des erfindungsgemäßen Verfahrens weist eine Erkennungsstation auf, die mit einer Röntgenquelle und einem Röntgensensor versehen ist. Röntgenquelle und Röntgensensor können dabei auf derselben Seite des Gegenstandes (Reflektionsanalyse) oder auf gegenüberliegenden Seiten des Gegenstandes (Durchleuchtungsanalyse) angeordnet sein. Als Röntgensensoren können Szintillationszähler oder für die Röntgenspektroskopie geeignete Halbleiterdetektoren eingesetzt werden. Weiterhin ist vorzugsweise eine Fördereinrichtung vorgesehen, durch die die Gegenstände durch die Erkennungsstation hindurchgeleitet werden. Die Röntgenfluoreszenzanalyse findet dabei vorzugsweise während des kontinuierlichen Transports der Gegenstände durch die Erkennungsstation statt.

Die Erfindung wird nachfolgend anhand eines in der Zeichnung dargestellten Ausführungsbeispiels näher erläutert. Es zeigt:

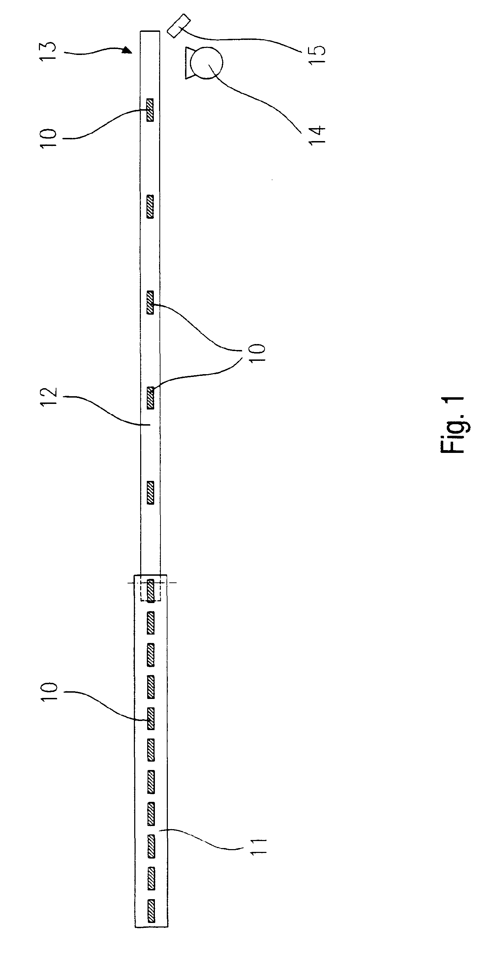

- Fig. 1: eine Vorrichtung zur Durchführung des Verfahrens mit den Erfindungsmerkmalen in Draufsicht.

Bei der in Fig. 1 gezeigten Vorrichtung werden verbrauchte Altakkumulatoren 10 unterschiedlichen Typs, also unterschiedlicher chemischer Zusammensetzung, durch geeignete Mittel auf einem ersten Förderer 11 so abgelegt, daß sie mit ihrer Längsachse in Transportrichtung weisen. Mit dem vorliegenden Verfahren sollen Nickel-Metall-Hydrid-Akkumulatoren, die chemische Elemente aus der Lanthanidengruppe enthalten, aussortiert werden. Von dem ersten Förderer 11 werden die Altakkumulatoren 10 auf einen zweiten Förderer 12 abgelegt, der eine höhere Transportgeschwindigkeit aufweist. Hierdurch wird die Distanz zwischen den einzelnen Altakkumulatoren 10 erhöht.

Die Altakkumulatoren 10 passieren eine Erkennungsstation 13. In der Erkennungsstation 13 sind eine Röntgenquelle 14 und ein Detektor 15 angeordnet, die sich im vorliegenden Fall auf derselben Seite des Förderers 12, in Transportrichtung gesehen, befinden.

Von der Röntgenquelle 14 wird Röntgenstrahlung in einem Energiebereich von etwa 30 bis 200 kV abgestrahlt. Diese trifft auf den sich gerade in der Erkennungsstation 13 befindenden Altakkumulator 10. Ein Teil dieser Röntgenstrahlung wird als Streustrahlung zurückgeworfen. Ein anderer Teil durchdringt den Metallmantel des Altakkumulators 10. Handelt es sich bei dem Altakkumulator 10 um einen Nickel-Metall-Hydrid-Akkumulator, der chemische Elemente aus der Lanthanidengruppe enthält, werden die Atome dieser Elemente zu Röntgenfluoreszenzstrahlung in einem charakteristischen Bereich von 30 bis 45 kV ausgesendet. Diese Röntgenfluoreszenzstrahlung ist hart genug, den Metallmantel des Altakkumulators 10 zu durchdringen, so daß sie neben der Streustrahlung vom Detektor 15 detektiert werden kann.

Die Detektierung der Altakkumulatoren 10 findet in der Erkennungsstation 13 während der kontinuierlichen Bewegung der Altakkumulatoren 10 statt. Durch die Bewegung der Altakkumulatoren 10 auf dem Förderer 12 und der damit verbundenen Variation des Abstandes zwischen dem Altakkumulator 10 und dem Detektor 15 wird eine starke zeitliche Schwankung der Dosisleistungen, die am Detektor 15 gemessen werden, bedingt. Um hier Nickel-Metall-Hydrid-Akkumulatoren mit chemischen Elementen aus der Lanthanidengruppe sicher von anderen Altakkumulatoren auszusortieren, bieten sich folgende Auswertemethoden an:

Nach einer ersten Auswertemethode wird die Dosisleistung der für Lanthaniden charakteristischen Röntgenfluoreszenzstrahlung im Energiebereich von 30 bis 45 kV parallel mit der Dosisleistung in einem benachbarten Energiebereich, beispielsweise 45 bis etwa 60 kV oder 20 bis 30 kV, gemessen und verglichen. Übersteigt das Verhältnis der Dosisleistungen in den beiden Energiebereichen einen definierten Schwellenwert, so enthält der Altakkumulator 10 Lanthaniden. Durch eine entsprechende Auswerteeinheit der Erkennungsstation 13 wird ein entsprechendes Signal zu einer Sortierstation gegeben und diese Altakkumulatoren 10 aussortiert.

Eine weitere Auswertemethode besteht darin, die Altakkumulatoren 10 mit polarisierter Röntgenstrahlung anzuregen. Die auftretende Streustrahlung wird ihre Polarisationsebene beibehalten, während die von den Atomen aus der Lanthanidengruppe ausgesendete Röntgenfluoreszenzstrahlung auch außerhalb der Polarisationsebene der von der Röntgenquelle 14 ausgesendeten Erregerstrahlung liegt. Der Detektor 15 überprüft also in diesem Fall das Vorliegen von Röntgenstrahlung außerhalb der Polarisationsebene der Erregerstrahlung. Ist dies der Fall, wird wiederum ein Steuersignal an eine Sortierstation gegeben und der entsprechende Altakkumulator aussortiert.

In dem in Fig. 1 gezeigten Ausführungsbeispiel wird eine Reflektionsanalyse durchgeführt. Sprich: Röntgenquelle 14 und Detektor 15 liegen, in Transportrichtung des Förderers 12 gesehen, auf derselben Seite des Förderers 12. Alternativ kann auch eine Durchleuchtungsanalyse vorgenommen werden, sprich: die Röntgenquelle 14 und der Detektor 15 sind auf gegenüberliegenden Seiten des Förderers 12, in Transportrichtung gesehen, angeordnet. Vom Detektor 15 wird somit die den Altakkumulator 10 durchdringende Erregerstrahlung neben der bei Altakkumulatoren 10 mit chemischen Elementen aus der Lanthanidengruppe auftretenden Röntgenfluoreszenzstrahlung detektiert.

Als Detektor 15 können Szintillationszähler oder für die Röntgenspektroskopie geeignete Halbleiterdetektoren eingesetzt werden.

Aus der vorstehenden Beschreibung wird deutlich, daß mit der erfindungsgemäßen Methode nur Altakkumulatoren 10 aussortiert werden können, die eine Röntgenfluoreszenzstrahlung aussenden, die hinreichend hart ist, einen Metallmantel zu durchdringen. Dieses sind eben die vorstehenden Nickel-Metall-Hydrid-Akkumulatoren, die chemische Elemente aus der Lanthanidengruppe enthalten. Es verbleibt eine Restfraktion von Altakkumulatoren 10 unterschiedlicher chemischer Zusammensetzung, also unterschiedlichen Typs. Diese können in einem nachfolgenden Sortierschritt durch eine gesonderte Erkennungseinheit, wie sie beispielsweise in der DE 196 10 093 A1 offenbart ist, sortiert werden. Selbstverständlich kann der Sortierschritt nach der DE 196 10 093 A1 auch zuerst ausgeführt werden und dann der Sortierschritt nach der vorliegenden Erfindung.

### Bezugszeichenliste:

- 10: Altakkumulator
- 11: Förderer
- 12: Förderer
- 13: Erkennungsstation
- 14: Röntgenquelle
- 15: Detektor

## Patentansprüche

1. Verfahren zum Aussortieren von Gegenständen (10), die chemische Elemente aus der Lanthanidengruppe enthalten und einen Metallmantel aufweisen, aus anderen Gegenständen, insbesondere zum Aussortieren gebrauchter Nickel-Metall-Hydrid-Altbatterien oder Nickel-Metall-Hydrid-Altakkumulatoren (10) aus anderen Altbatterien oder Altakkumulatoren (10), **dadurch gekennzeichnet, daß** die Gegenstände (10), die chemische Elemente aus der Lanthanidengruppe aufweisen, aufgrund einer Röntgenfluoreszenzanalyse aussortiert werden.

2. Verfahren nach Anspruch 1, dadurch gekennzeichnet, daß das Verhältnis der Dosisleistungen der Röntgenstrahlung im Fluorenszenzbereich des jeweiligen chemischen Elementes aus der Lanthanidengruppe und eines zu diesem Bereich benachbarten Energiebereiches gemessen wird.

3. Verfahren nach Anspruch 1, dadurch gekennzeichnet, daß die Gegenstände (10) mit polarisierter Röntgenstrahlung angeregt werden und Röntgenstrahlung in wenigstens von der Polarisationsebene verschiedenen Ebene gemessen wird.

4. Verfahren nach einem der Ansprüche 1 bis 3, dadurch gekennzeichnet, daß die Gegenstände (10) mit Röntgenstrahlung bestrahlt werden und entweder die reflektierte Strahlung oder die die Gegenstände (10) durchdringende Strahlung neben der Fluoreszenzstrahlung gemessen wird.

5. Verfahren nach einem der Ansprüche 1 bis 4, dadurch gekennzeichnet, daß die Gegenstände (10) mit eine Röntgenstrahlung von 30 bis 200 kV angeregt werden.

6. Verfahren nach einem der Ansprüche 1 bis 5, dadurch gekennzeichnet, daß die Gegenstände (20) mit monochromatischer oder polychromatischer Röntgenstrahlung angeregt werden.

7. Vorrichtung zur Durchführung des Verfahren nach einem der Ansprüche 1 bis 6, dadurch gekennzeichnet, daß in einer Erkennungsstation (13) eine Röntgenquelle (14) und ein Röntgensensor (15) auf der selben Seite oder gegenüberliegende Seiten der Gegenstände (10) angeordnet sind.

8. Vorrichtung nach Anspruch 7, dadurch gekennzeichnet, daß der Röntgensensor (15) ein Szintilationszähler oder ein für die Röntgenspektroskopie geeignete Halbleiterdetektoren ist.
